**Europäisches Patentamt**

**European Patent Office**

**Office européen des brevets**

(19)

(11) Publication number: **0 032 882**
**B1**

(12)                    **EUROPEAN PATENT SPECIFICATION**

(45) Date of publication of patent specification: **28.09.83**       (51) Int. Cl.³: **F 24 J 3/02**

(21) Application number: **81830011.3**

(22) Date of filing: **21.01.81**

(54) Solar collector for heating purposes.

(30) Priority: **22.01.80 IT 4767080**

(43) Date of publication of application:
**29.07.81 Bulletin 81/30**

(45) Publication of the grant of the patent:
**28.09.83 Bulletin 83/39**

(84) Designated Contracting States:
**AT BE CH DE FR GB LI NL SE**

(56) References cited:
**DE - A - 2 455 576**
**DE - A - 2 608 302**
**US - A - 3 943 911**
**US - A - 3 944 278**
**US - A - 3 987 782**

(73) Proprietor: **Bianchini, Giuliano**
**Via Tiberina, 1224**
**I-05035 Narni (Terni) (IT)**

(72) Inventor: **Bianchini, Giuliano**
**Via Tiberina, 1224**
**I-05035 Narni (Terni) (IT)**

(74) Representative: **Bazzichelli, Alfredo et al,**
**c/o Società Italiana Brevetti Piazza Poli 42**
**I-00187 Roma (IT)**

Courier Press, Leamington Spa, England.

Solar collector for heating purposes

This invention relates to a solar collector for heating fluids, particularly water for domestic uses.

Because of the shortage of energy sources which exists today, modern technology is continuously working on research programs seeking new forms of energy, among which the thermal energy from solar radiation is drawing considerable interest.

Apparatus for heating water which use solar energy to this end are well known in the prior art.

Such apparatus comprise, generally, a surface which is apt to absorb said radiating energy which is converted into thermal energy to be transferred to groups of tubes carrying water which is caused to circulate in a closed circuit and the thermal energy of which is transferred, through a heat exchanger, to the water to be used contained in a storage tank.

The prior art also teaches of an apparatus in which the thermal energy developed by a surface exposed to solar radiation is transferred to a system which comprises two immiscible liquids contained in a sealed container, said liquids being heated through circulation caused by convective movements, the thermal energy accumulated in the overfloating liquid being transferred through heat exchange to the circuit of the water to be used. However, production of such apparatus presents disadvantages of structural complexity, low efficiency, heavy heat loss and high costs.

Particularly with apparatus of the first previously mentioned type, among the disadvantages limiting their extensive use there is the high thermal inertia of the water used for the primary circuit, said inertia not allowing to obtain a high thermal exchange efficiency due to the small temperature differential obtainable for a given quantity of absorbed thermal energy. Furthermore, the large amount of steel required for their construction keeps their cost, dimensions and the amount of primary energy required for the production of steel material, at high levels with the consequence that an extensive use of such apparatus would jeopardize the actual saving of energy with respect to the total energy balance.

The second cited prior art apparatus shows disadvantages of low thermal efficiency also, though they make use of liquids having a low thermal inertia, since due to the necessity of direct thermal exchange between the liquids, a high mass or volume of the liquids is required, so that the advantage of using said low thermal inertia liquids is counter-balanced by the disadvantage of having to use large volumes which eventually leads to a high total thermal inertia.

US—A—3987782 describes a solar heat holder wherein a heat-transfer fluid is heated in a thin-film condition by solar energy. Said fluid is passing between a heat absorbing surface and a baffle, so that the bulk of heat-transfer fluid in the holder is gradually heated. The heat-transfer fluid gives up heat to a utility water passing in a tubular heat exchanger. This system uses a large volume of heat-transfer fluid which makes the thermal inertia high and the response low. Moreover, it does not build up a volume of heated utility water, unless a secondary heat exchanger is used, which would make this system cumbersome.

US—A—3994278 describes a system for heating and cooling a dwelling room, arranged horizontally on the surface of a roof. This system uses only one heat-transfer fluid, namely water, which constitutes a heat sink, for accumulation of heat from solar energy. Movement of said water for heat-exchanging purpose is accomplished by a pump, which circulates water from a lower roof structure to an upper basin exposed to the sun. This system shows a high thermal inertia and requires an external source of mechanic power.

US—A—3943911 describes a solar heat collector of modular and compact structure. Said solar collector heats a fluid, namely water, which flows by gravity from top to bottom along an absorbing surface heated by solar energy. This system again requires an external source of mechanic power for circulating the water, as usually the heated water is used as a heat-transfer fluid for heating a volume of utility water. Moreover the efficiency of this system depends on the flow rate of the water, which cannot be easily controlled as it in turn depends on pressure and gravity. Consequently this system is not self-adaptive to variable conditions of the sun radiation.

It is the object of this invention to provide a solar collector for heating fluids, particularly water, characterized by structural simplicity, high efficiency, negligible loss of accumulated heat, both during the night and in absence of sunlight, ease of installation and relatively low in cost, which offers, in an extremely simple way, all the advantages of conventional solar collectors for hot water production plants or the like, eliminating their disadvantages.

According to the present invention, a solar collector for heating a fluid by transforming solar radiation energy into thermal energy, comprises in combination:

a body made of thermal insulating material having a reduced thickness with respect to the height and width thereof;
a coating of impervious material tightly fitting on the front, rear, upper and lower surfaces of said body (10), said coating being provided with grooves on its outer surfaces, said grooves having a substantially vertical direction at said front and rear surfaces of said body (10);

a plate of material which allows solar energy to be transferred from the one surface to the other surface thereof, said plate being juxtaposed on the outer surface of said coating fitting on the front surface of said body (10), substantially in contact with the peaks of said grooves, so that between said plate and said coating substantially vertical passages are defined;

a supporting frame including walls juxtaposed on said coating on said upper, rear and lower surfaces of said body, substantially in contact with the peaks of said grooves, so as to define passages between said walls and said coating, said supporting frame being formed in coincidence with the coating on said rear surface, of a good heat conducting material, said supporting frame being also fluid tight sealed with the side faces of said body and with the perimeter of said plate, said supporting frame being part of a housing which defines a closed chamber;

a liquid having a low thermal capacity and a high thermal expansion coefficient, which fills said passages between the plate, the supporting frame and said coating;

a check valve element, which in the one position allows flow of said liquid through said passages in an upward direction along said front surface and in a downward direction along said rear surface, while in the other position it inhibits a flow of said liquid in the opposite direction; and

a fluid contained in said housing, in heat exchanging relationship with said wall of the supporting frame in coincidence of with the coating on said rear surface,

whereby the radiating energy of the sun, transferred through said plate and absorbed as heat by said liquid, causes a temperature and volume differential to be established in said liquid, said differential driving a continuous flow of said liquid towards the heat exchanging wall of said supporting frame, resulting in a heat transfer to the fluid contained in said housing, an inverse heat transfer process being inhibited by said check valve.

The invention will become more apparent from the following description and the accompanying drawings which represent a preferred and illustrative embodiment of the invention.

In the drawings:

Fig. 1 is a schematic side elevation in transversal section of a solar collector according to the invention; and

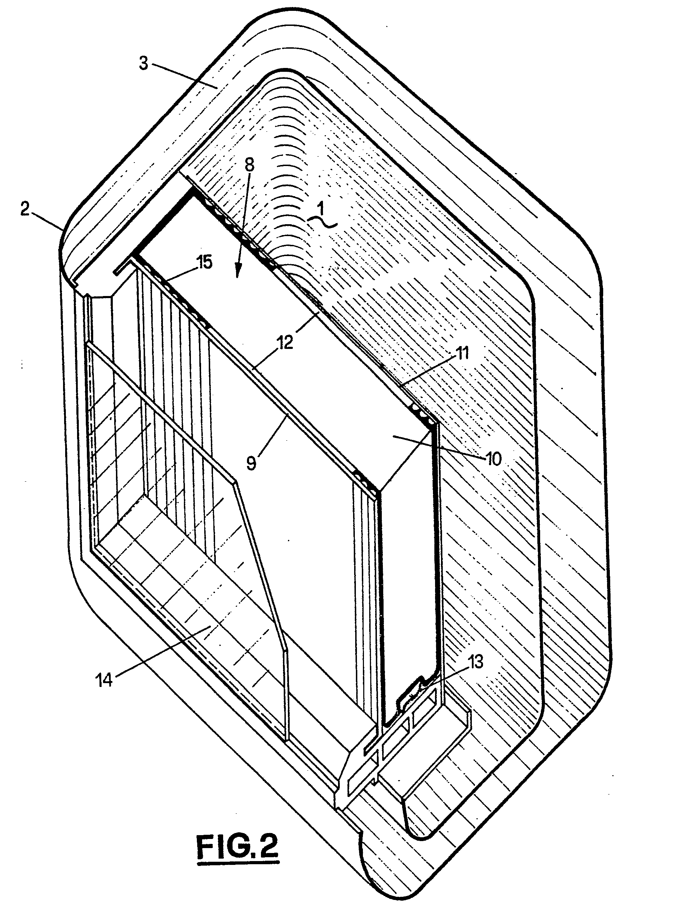

Fig. 2 is an isometric fragmentary view with upper and side parts removed illustrating the structure of the solar collector in more detail.

Referring now to the drawings, the numeral 1 denotes generally a closed chamber or vessel containing a fluid to be heated which will be referred to hereinafter as "water".

Vessel 1 is formed of an essentially parallelepipedal shaped housing made of a material which is apt to withstand the effect of temperatures up to at least 98°C and that can resist water pressure.

Said housing comprises a shell 2 having a gap 3 filled with insulation material in order to avoid heat losses towards the outside ambient.

The outer shell 2 is made of a material which can withstand high and low ambient temperatures; is weather proof and which is not affected by ultra violet rays, and is provided with the necessary devices, for example supporting brackets 4, for fixing to a wall or other outside supporting member or for fixing directly to the ground, preferably in a vertical position and at a slight angle.

The vessel 1 is further provided with a lower cold water inlet 5 and an upper hot water outlet 6, above which a closed space 7 is provided to allow expansion of the heated water.

Said outer shell 2 on its front, i.e. on its side facing the sun, presents a recess in which the solar collector 8 according to the invention is inserted.

The elements which form the solar collector 8 are supported by said shell 2 which therefore defines a supporting frame. Said recess for inserting the solar panel is closed on the back by a wall 11 of heat conducting material, for example metal, particularly a copper alloy, which is fixed to the shell 2.

The solar collector 8 comprises, as viewed from the front side to the rear side, a plate 9, a panel 10, the wall 11, and a continuous gap or passage 12, which surrounds said panel 10, said passage containing a liquid which acts as a thermal vehicle.

Preferably on the front of the solar collector 8 and closing the opening of said recess, a further plate 14 is provided, such as a window pane or other transparent material, including plastic, said plate 14 serving the purpose of admitting solar radiation and inhibiting heat losses from the plate 9 itself.

The plate 9 can be made of transparent glass, plastic or the like or an opaque sheet and serves the double purpose of allowing the transfer of solar energy and of containing the liquid vehicle.

Although it is preferable that the plate be of transparent material, in which case the surface of panel 10 is blackened, the characteristics of the solar collector according to the invention allow to use, as plate 9, a sheet of metal which is blackened on its outer surface, and in this case the liquid acting as thermal vehicle is heated by contact with said sheet of metal.

The panel 10, which has a relatively reduced thickness with respect to the height and width thereof, serves three purposes: the first is to absorb the maximum radiating energy from the sun to be imparted to the liquid acting as thermal vehicle to be converted into thermal energy, the second purpose is to avoid thermal losses from inside of vessel 1 towards the outside, the third purpose is to avoid infiltrations of the liquid acting as thermal vehicle (said panel being impervious) it also having to be slightly deformable for allowing expansion of the liquid due to temperature increase.

To this end, the panel 10 is made of thermally insulating material, its outward facing surface being of a color apt to absorb heat from the solar spectrum, in the case that plate 9 is transparent.

Preferably the panel 10 is formed of an internal body of expanded polyurethane, made impervious by applying on its perimetral surface, in contact with the liquid acting as thermal vehicle, a coating such as rubber applied in the liquid state with subsequent drying, or by wrapping said body in a tight fitting sheath as of neoprene or the like, making sure that said impervious coating, no matter how it may be obtained, has its surface facing towards solar radiation or front surface, adequately blackened.

The continuous passage 12 is present only at the front, upper, rear and lower surfaces of said panel 10. The side surfaces of said panel 10 are in direct and liquid tight contact with the supporting frame, or shell 2, so as to avoid a direct passage of the liquid thermal vehicle along said side surfaces of panel 10.

It is therefore not necessary that said coating be applied on said side surfaces of panel 10, as well. The surfaces of said panel, or of its coating, in direct contact with said liquid are provided with grooves 15, running vertically on the front and rear surfaces, said grooves 15 being present on the upper and lower surfaces as well, thus forming a plurality of continuous flow passages.

The supporting frame and the plate 9 which surround panel 10 are substantially in contact with the peaks of said grooves 15, so that the liquid thermal vehicle is impeded in the horizontal sense thus moving preferably along said grooves and following a closed path.

The depth of said grooves 15 is of a few millimeters, preferably about 2 millimeters, so that the volume or total mass of said liquid thermal vehicle is relatively small.

The wall 11 serves the purpose of transferring by conduction the thermal energy absorbed by the liquid to the water stored in vessel 1, besides aiding in confining the passage 12 for the liquid thermal vehicle.

Therefore said wall 11 has the function of a heat exchange surface. Particularly wall 11 is formed by a sheet of an impervious material which is a good heat conductor, and sufficiently resistant to the pressure of the stored water.

Preferably, said wall 11 is made of a metal plate of appropriate thickness.

The liquid acting as thermal vehicle is a liquid which possesses a low thermal capacity, i.e. which rapidly increases in temperature even with a small amount of absorbed energy.

Furthermore it must have a high thermal expansion coefficient as this feature results in a highly effective convective movement of the liquid vehicle.

For simplicity the liquid vehicle may be water, which however in the case of the present invention is not the ideal thermal vehicle, as in contrast with the general use made of water in primary circuits of solar collectors of the prior art.

Furthermore the total mass of the liquid vehicle must preferably be as small as possible in order to increase its temperature and actuate its circulation as much as possible for a given amount of absorbed heat. This also is in contrast with the prior art.

Liquids which are well suited to act as thermal vehicles according to the invention are, generally speaking, alcohols and mixtures thereof with water of the types used as antifreezing liquids, as well as silicone oils and mixtures thereof having high fluidity. Mercury may also be employed as a suitable thermal vehicle liquid. A vast choice for these liquids is possible as long as they conform to the characteristics previously outlined.

When the plate 9 is transparent, said liquid vehicle may also contain either in suspension or dissolved therein, a black or dark pigment in order to enhance absorption of solar heat or it may also contain a colored pigment for purely aesthetic reasons.

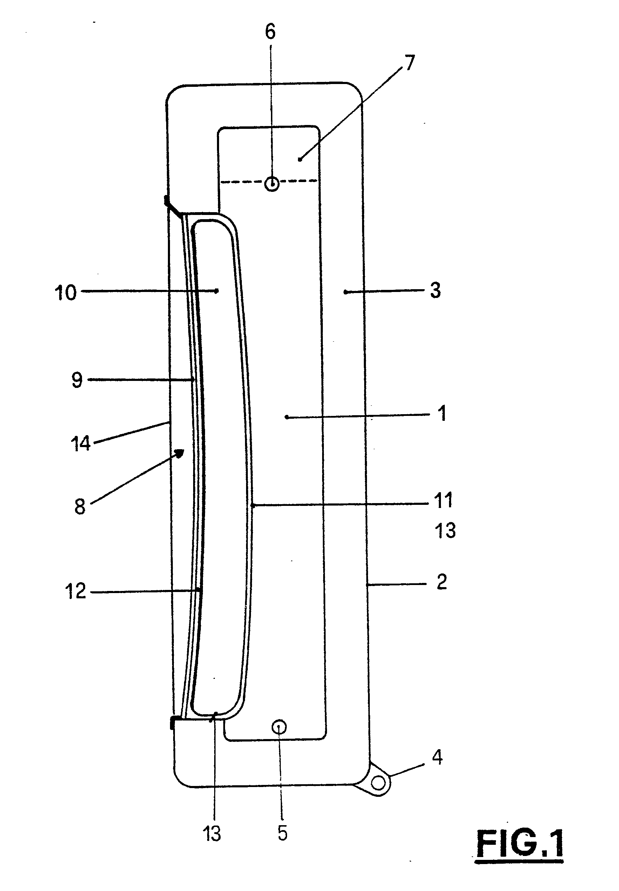

In operation, absorbent panel 10 and/or plate 9 convert solar energy to thermal energy which is transferred to the liquid vehicle on the front side of passage 12, thus producing a differential of temperature and density with respect to the liquid vehicle on the rear side of passage 12. The liquid is driven in a clockwise direction, as viewed in Fig. 1, in the closed circuit formed by passage 12 and at the same time the liquid at lower temperature which was in contact with the water in vessel 1 through wall 11 is moved toward the front surface of panel 10. In this way, a thermo-convective movement of the liquid vehicle is established with a low thermal inertia and responsive to a minimum radiation, heat being taken from panel 10 in the path along the section of passage 12 facing outwards, said heat being transferred to the water in vessel 1 through wall 11 during the flow in the section of passage 12 which is facing inwards.

It should be noted at this point that solar collector 8, built as previously described, and separated from the water heater according to the invention, would per se be suited for alternative uses, such as for heating of volumes of air, by applying the device with an air tight seal in an appropriate opening or on an outside wall of a building so that said liquid vehicle transfers the heat absorbed by transformation of solar energy into thermal energy to the living quarters of an apartment placed on the side of wall 11. As an alternative any type of fluid can be heated with appropriate installation variations, for domestic or industrial use.

In order to avoid heat losses caused by inverse circulation (i.e. in counterclockwise direction in Fig 1) of the liquid vehicle, in the passage 12 when the temperature of said liquid on the side of wall 11 is above that of the side of plate 9, a check valve 13 is provided on the inside of a section of passage 12, said valve being made of a strip of flexible material, relatively elastic, fixed with one edge to panel 10, such as to allow circulation in a clockwise direction of the liquid vehicle in one position of said valve 13 parallel to the flow direction of the liquid and to inhibit said circulation in the inverse direction (counterclockwise in Fig. 1) in the other valve's position transversal to said flow direction, thus blocking the way in passage 12.

Such flexible strip 13 is preferably placed on the upper or lower surface of panel 10, housed in a horizontal groove cut transversally with respect to the flow grooves. Said strip may be arcuately shaped near its free edge, so that an inverse flow of the liquid vehicle causes a lifting effect to be applied to the strip which tends to be positioned across said interspace thus blocking said flow.

As said valve 13 allows a heat transfer to be effective only one way from the outside towards the inside of the solar collector and not vice-versa, the solar collector according to the invention may well be defined as "thermal diode".

The solar collector according to the invention is characterized in that it has a total efficiency which is quite high with respect to the solar collectors of the prior art, due to the elimination of many factors leading to a low efficiency of heat exchange and a high thermal inertia.

The solar collector according to the invention allows to transfer solar energy to the exchange wall 11, not only when it is directly exposed to solar radiation, but also when the sun is hidden by clouds or is very low on the horizon.

Moreover, the solar collector according to the invention is further characterized in that the materials used for its construction are of low cost and it is simple to produce.

## Claims

1. A solar collector for heating a fluid by transforming solar radiation energy into thermal energy, characterized in that said solar collector comprises in combination:

a body (10) made of thermal insulating material having a reduced thickness with respect to the height and width thereof;
a coating of impervious material tightly fitting on the front, rear, upper and lower surfaces of said body (10), said coating being provided with grooves on its outer surfaces, said grooves (15) having a substantially vertical direction at said front and rear surfaces of said body (10);
a plate (9) of material which allows solar energy to be transferred from the one surface to the other surface thereof, said plate (9) being juxtaposed on the outer surface of said coating fitting on the front surface of said body (10), substantially in contact with the peaks of said grooves (15), so that between said plate (9) and said coating substantially vertical passages (12) are defined;
a supporting frame (2) including walls juxtaposed on said coating on said upper, rear and lower surfaces of said body, substantially in contact with the peaks of said grooves (15) so as to define passages (12) between said walls and said coating, said supporting frame (2) being formed in coincidence with the coating on said rear surface, of a good heat conducting material, said supporting frame (2) being also fluid tight sealed with the side faces of said body (10) and with the perimeter of said plate (9), said supporting frame (2) being part of a housing which defines a closed chamber (1);
a liquid having a low thermal capacity and a high thermal expansion coefficient, which fills said passages (12) between the plate (9), the supporting frame (2) and said coating;
a check valve element (13) which in the one position allows flow of said liquid through said passages (12) in an upward direction along said front surface and in a downward direction along said rear surface, while in the other position it inhibits a flow of said liquid in the opposite direction; and
a fluid contained in said housing, in heat exchanging relationship with said wall (11) of the supporting frame (2) placed in coincidence of with the coating on said rear surface,

whereby the radiating energy of the sun, transferred through said plate (9) and absorbed as heat by said liquid, causes a temperature and volume differential to be established in said liquid, said differential driving a continuous flow of said liquid towards the heat exchanging wall (11) of said supporting frame (2), resulting in a heat transfer to the fluid contained in said housing, an inverse heat transfer process being inhibited by said check valve (13).

2. The solar collector according to claim 1, wherein said coating is more elastically deformable at the rear surface of said body than at the front surface of said body, in order to allow thermal expansion of said liquid.

3. The solar collector according to claim 1 or 2, wherein said check valve (13) is a metal strip placed in a longitudinal groove of said upper or lower surface of the body, a first edge of said strip closest to said plate (9) being fixed to the coating of said body, and the second edge farthest away from said plate being free and said strip having an arcuate profile close to said second edge, so that a flow of said liquid directed from the second to the first edge causes the strip to be flexed bringing said second edge in contact with said supporting frame, thus blocking the flow of liquid.

4. The solar collector according to any of the preceding claims, wherein said plate (9) is of a transparent material and the front surface of said coating is of a dark color.

5. The solar collector according to any of the preceding claims 1 to 3, wherein said plate (9) is of an opaque material with its front surface blackened.

6. The solar collector according to any of the preceding claims 1 to 4, wherein said liquid contains a dark colored pigment.

7. The solar collector according to claim 1, wherein said liquid is a mixture of an alcohol and water.

8. The solar collector according to claim 1, wherein said liquid is a mixture of fluid silicone oils.

9. The solar collector according to claim 1, wherein said thermally insulating material is expanded polyurethane.

10. The solar collector according to claim 1, wherein an additional transparent plate (14) supported by said supporting frame (2) is placed in front of said first mentioned plate (9).

**Patentansprüche**

1. Sonnenkollektor für die Heizung einer Flüssigkeit durch Umwandlung der Sonnentrahlungsenergie in Wärmeenergie, dadurch gekennzeichnet, dass der Sonnenkollektor in Kombination umfasst:

eine aus Wärmedämmstoff bestehenden Körper (10) mit einer bezüglich seiner Höhe und Breite verkleinerten Dicke;

eine aus undurchlässigem Stoff bestehende Bekleidung, welche eng an de vorderen, hinteren, oberen und unteren Oberflächen des Körpers (10) liegt, die Bekleidung auf seinen äusseren Oberflächen mit Rillen versehen ist, die Rillen (15) auf den vorderen und hinteren Oberflächen des Körpers (10) eine wesentlich senkrechte Richtung aufweisen;

eine Platte (9) aus einem Stoff bestehend, der die Sonnenenergie von einer zu der anderen seiner Oberflächen zu übertragen gestattet, die Platte (9) liegt der äusseren Oberfläche von der an der vorderen Oberfläche des Körpers (10) liegenden Bekleidung an, wesentlich in Berührung mit den Rillenspitzen, so dass wesentlich vertikale Kanäle (12) zwischen der Platte (9) und der Bekleidung gebildet sind;

eine Trägergestell (2), das Wände an der Bekleidung auf den oberen, hinteren und unteren Oberflächen des Körpers liegend einschliesst, wesentlich in Berührung mit den Rillenspitzen, so dass Kanäle (12) zwischen den Wänden und der Bekleidung gebildet sind, das Trägergestell (2) aus einem gut wärmeleitenden Stoff an der Bekleidung auf der hinteren Oberfläche besteht, das Trägergestell (2) ausserdem mit den Seitenflächen des Körpers und dem Unfang der Platte (9) fluiddicht ist, das Trägergestell (2) ein Teil einer eine geschlossene Kammer (1) bildenden Hülle ist;

eine Flüssigkeit niedriger Wärmekapazität und höheren Wärmeausdehnungskoeffizients, die die Kanäle (12) zwischen der Platte (9), dem Trägergestell (2) und der Bekleidung ausfüllt;

ein Rückschlagventil (13), das bei einer Lage das Fliessen der Flüssigkeit durch die Kanäle (12) in der Richtung aufwärts die vordere Oberfläche entlang und in der Richtung abwärts die hintere Oberfläche entlang gestattet, während, es bei anderer Lage das Fliessen der Flüssigkeit in der entgegengesetzten Richtung verhindert; und

ein in der Hülle enthaltenes Fluid im Wärmeaustauschsverhältnis mit der bei der Bekleidung auf der hinteren Oberfläche gesetzten Wand (11) des Trägergestells (2), so dass die Sonnenstrahlungsenergie durch die Platte (9) übertragen und als Wärme von der Flüssigkeit absorbiert, in der Flüssigkeit eine Temperatur- und Volum-Differenz feststellen lässt, die einen beständigen Flüssigkeitsfluss nach der Wärmeaustauschswand (11) des Trägergestelles (2) verurschat, welcher eine Wärmeübertragung zu dem in der Hülle enthaltenen Fluid ausführt, wobei ein entgegengesetztes wärmeaustauschendes Verfahren von dem Rückschlagventil (13) verhindert wird.

2. Sonnenkollektor gemäss Anspruch 1, wobei die Bekleidung mehr bei der hinterer Oberfläche des Körpers als bei der vorderen Oberfläche des Körpers elastisch verformt werden kann, um die Wärmeausdehnung der Flüssigkeit zu gestatten.

3. Sonnenkollektor gemäss Anspruch 1 oder 2, wobei das Rückschalgventil (13) ein metallischer Streifen ist, der in eine Längsrille der oberen und unteren Oberfläche des Körpers gesetzt ist, eine der Platte nähere erste Kante des Streifens an der Bekleidung des Körpers befestigt ist und die zweite Kante weiter von der Platte entfernt ist, wobei der Streifen nahe der zweiten Kante ein gebogenes Profil aufweist, so dass ein aus der zweiten zu der ersten Kante gerichteter Flüssigkeitsfluss ein Biegen des Streifens zulässt, was die zweite Kante in Berührung mit dem Trägergestell bringt, wobei der Flüssigkeitsfluss gestoppt wird.

4. Sonnenkollektor gemäss einem der vorliegenden Ansprüche, wobei die Platte (9) aus einem durchsichtigen Stoff besteht und die vordere Oberfläche der Bekleidung dunkelfarbig ist.

5. Sonnenkollektor gemäss einem der vorliegenden Ansprüche 1—3, wobei die Platte (9) aus einem undurchsichtigen Stoff besteht, der an der vorderen Oberfläche geschwärzt ist.

6. Sonnenkollektor gemäss einem der vorliegenden Ansprüche 1—4, wobei die Flüssigkeit ein schwarzfarbiges Pigment enthält.

7. Sonnenkollektor gemäss Anspruch 1, wobei die Flüssigkeit eine Mischung aus Alkohol und Wasser ist.

8. Sonnenkollektor gemäss Anspruch 1, wobei die Flüssigkeit eine Mischung aus fluiden Silikonölen ist.

9. Sonnenkollektor gemäss Anspruch 1, wobei der Wärmedämmstoff Polyurethanschaumstoff ist.

10. Sonnenkollektor gemäss Anspruch 1, wobei eine weitere durchsichtige Platte (14), die von dem Trägergestell (2) gestützt ist, gegenüber der erste genannten Platte (9) gesetzt ist.

## Revendications

1. Collecteur solaire pour chauffer un fluide par transformation de l'énergie de radiation solaire en énergie thermique, caractérisé en ce que ledit collecteur solaire comprend en combinaison:

un corps (10) en matériel isolant thermique avec une épaisseur réduite par rapport à sa hauteur et largeur;

un revêtement en matériel imperméable qui adhère strictement aux surfaces antérieure, postérieure, supérieure et inférieure dudit corps (10), ledit revêtement étant pourvu de rainures (15) sur ses surfaces extérieures, les dites rainures (15) allant en direction substantiellement verticale sur les surfaces antérieure est postérieure dudit corps (10);

une plaque (9) d'un matériel qui consent à l'énergie solaire d'être transférée de l'une de ses surfaces à l'autre, ladite plaque (9) étant appuyée à la surface extérieure dudit revêtement qui adhère à la surface antérieure dudit corps (10), substantiellement en contact avec les sommets des dites rainures (15), de telle sorte que des passages verticaux (12) sont définis entre ladite plaque (9) et ledit revêtement;

un châssis de support (2) comprénant des parois appuyées au dit revêtement sur les dites surfaces supérieure, postérieure et inférieure dudit corps, substantiellement en contact avec les sommets des dites rainures de sorte que des passages (12) sont définis entre les dites parois et ledit revêtement, ledit châssis de support (2) étant formé, en corresondance du revêtement sur ladite surface postérieure, d'un matériel bon conducteur de la chaleur, ledit châssis de support (2) étant aussi fermé hermétiquement aux faces latérales dudit corps (10) et au périmètre de ladite plaque (9), ledit châssis de support (2) faisant part d'une enveloppe qui définit une chambre fermée (1);

un liquide à base capacité thermique et à coefficient de dilation thermique élevé qui remplit les dits passages (12) entre la plaque (9), le châssis de support (2) et ledit revêtement;

un élément à soupape de retenue (13) qui dans l'une de ses positions permet l'écoulement dudit liquide à travers les dits passages (12) en direction vers le haut le long de la surface antérieure et en direction vers le bas le long de la surface postérieure, tandis que dans l'autre position il empêche l'écoulement dudit liquide dans la direction opposée; et

un fluide contenu dans ladite enveloppe, en rapport d'échange de chaleur avec ladite paroi (11) du châssis (2) de support placée en correspondance de ladite surface postérieure,

de manière que l'énergie de radiation du soleil, transférée à travers la plaque (9) et absorbée sous forme de chaleur par ledit liquide, fait s'établir un différentiel de température et volume dans ledit liquide, ledit différentiel produisant un écoulement continu dudit liquid vers la paroi (11) d'échange de chaleur dudit châssis de support, donnant lieu à un transfert de chaleur au fluide contenu dans ladite enveloppe, un procès de transfert de chaleur inverse étant interdit par ladite soupape de retenue (13).

2. Collecteur solaire selon la revendication 1, où ledit revêtement est plus élastiquement déformable sur la surface postérieure dudit corps, que sur la surface antérieure dudit corps, dans le but de permettre la dilatation thermique dudit liquide.

3. Collecteur solaire selon la revendication 1 ou 2, où ladite soupape de retenue (13) est une bande métallique placée dans une rainure longitudinale de ladite surface supérieure ou inférieure dudit corps, un premier bord de ladite bande plus proche de ladite plaque (9) étant fixé au revêtement dudit corps et le second bord plus éloigné de ladite plaque étant libre et ladite bande étant d'un profil arqué près dudit second bord, de telle sorte qu'un écoulement dudit liquide dirigé du second au premier bord fait fléchir la bande en portant ledit second bord en contact dudit châssis de support, et en bloquant l'écoulement du liquide.

4. Collecteur solaire selon l'une quelconque des revendications précédentes, où ladite plaque (9) est en matériel transparent et la surface antérieure dudit revêtement est de couler sombre.

5. Collecteur solaire selon quelconque des revendications précédentes 1 à 3, où ladite plaque (9) est en matériel opaque avec sa surface antérieure noircie.

6. Collecteur solaire selon quelconque des revendications précédentes 1 à 4, où ledit liquide contient un pigment de couleur.

7. Collecteur solaire selon la revendication 1, où ledit liquide est un mélange d'alcool et d'eau.

8. Collecteur solaire selon la revendication 1, où ledit liquide est un mélange d'huiles siliconiques fluides.

9. Collecteur solaire selon la revendication 1, où ledit matériel isolant thermique est de la mousse de polyuréthane.

10. Collecteur solaire selon la revendication 1, où une ultérieure plaque transparente (14) sopportée par ledit châssis de support (2) est placée en face de la plaque (9) nommée en premier.

**FIG.1**

**FIG.2**